# EUROPÄISCHE PATENTSCHRIFT

(11) **EP 1 666 851 B1**
(45) Veröffentlichungstag und Bekanntmachung des Hinweises auf die Patenterteilung: **05.09.2007**
(21) Anmeldenummer: 05015730.4
(22) Anmeldetag: 20.07.2005
(51) Int. Cl.: G01F 11/24, B65B 1/36, B65B 5/06, B65B 37/20

(54) **Vorrichtung zum Dosieren von Schüttgut**
Device for proportioning bulk material
Dispositif de proportionner de la marchandise en vrac

(30) Priorität: 20.07.2004 DE 102004035081
(43) Veröffentlichungstag der Anmeldung: 07.06.2006
(73) Patentinhaber: Obermeyer, Felix, 59929 Brilon (DE)
(72) Erfinder: Obermeyer, Felix, 59929 Brilon (DE)

(56) Entgegenhaltungen:
- US-A- 3 231 105
- US-A- 4 991 632
- US-A- 5 551 604

## Beschreibung

Die Erfindung betrifft eine Vorrichtung zum Dosieren von Schüttgut gemäß dem Oberbegriff des Anspruchs 1.

Vorrichtungen zum Dosieren von Schüttgut werden häufig bei Abfüllmaschinen verwendet, um ein gleichmäßiges Befüllen z. B. von Transportbehältern oder Verpackungen zu gewährleisten.
Bei derartigen Vorrichtungen unterscheidet man im Wesentlichen drei Dosiermethoden; gravimetrisches und volumetrisches Dosieren sowie das Dosieren über ein Kammervolumen.

Beim Dosieren über ein vorgegebenes Kammervolumen, wird das Schüttgut zuerst in einen Dosierkammer abgefüllt, die nach dem Befüllvorgang verschlossen wird. Anschließend wird die geschlossene Dosierkammer von der Befüllseite zur Austragungsseite der Dosiervorrichtung bewegt und dort geöffnet. Das Schüttgut kann dann aus der Dosierkammer z.B. in einen Transportbehälter oder eine Verpackung für das betreffende Schüttgut fließen. Zur emeuten Befüllung wird die Dosierkammer wieder zur Befüllungsseite der Dosiervorrichtung bewegt.
Derartige Vorrichtungen sind in der Regel mechanisch sehr aufwendig aufgebaut.
Beim mechanischen Verschließen der Dosierkammer kann das Schüttgut insbesondere wenn es sich um bruchempfindliche Produkte wie Pommes frites, Cornflakes, Saatgut oder Pellets handelt, durch die auftretenden Scherkräfte beschädigt werden.

Die einzelnen Bruchstücke müssen teilweise aufwendig ausgesondert werden. Beschädigten Produkte stellen insbesondere im Lebensmittelbereich eine äußerst unerwünschte ästhetische Beeinträchtigung dar. Die Kunden wünschen optisch einwandfreie Ware.

Je nach Korngröße des Produkts und je nach Werkstoffhärte der mechanischen Verschlussvorrichtung der Dosiervorrichtung sind Verschleißerscheinungen an dieser nicht auszuschließen. Dies kann unter anderem auch einen Einfluss auf die Genauigkeit der Dosiervorrichtung haben.

Ein weiterer Nachteil dieser Vorrichtungen besteht darin, dass das Volumen der Dosierkammer und damit die Dosiermenge des Schüttguts fest vorgegeben ist. Ein Nachjustieren der Dosiermenge, wenn die momentane Abfüllmenge und die gewünschte Dosiermenge geringfügig abweichen oder eine Neueinstellung der Dosiermenge, wenn eine völlig andere Abfüllmenge gewünscht wird, ist nur aufwendig möglich. In der Regel müssen die Dosierkammern gegen neue ausgetauscht werden.

Bei der gravimetrischen oder volumetrischen Dosiermethode wird das Schüttgut mittels einer geeigneten Fördertechnik (Schneckenförderer, Förderband oder Vibrationsrinne) in einen Dosierbehälter oder auf eine Waage gefördert. Sobald die gewünschte Dosiermenge erreicht ist, wird die Fördereinrichtung von einer entsprechenden Steuerung gestoppt. In einem zweiten Arbeitsschritt wird das Schüttgut zu einer Austragsöffnung geführt, wo es z. B. in einen Transportbehälter oder eine Verpackung fließen kann. Derartige Dosiereinrichtungen sind ebenfalls sehr aufwendig aufgebaut. Für den Betrieb einer solchen Dosiervorrichtung ist eine aufwendige Steuerung mit entsprechender Mess- und Regeltechnik notwendig, die normalerweise auch eine Korrektur der Nachlaufmenge umfassen muss.
Je nach der eingesetzten Fördertechnik (z. B. Schneckenförderer) können Schädigungen am Schüttgut aufgrund der starken mechanischen Belastung nicht ausgeschlossen werden.

Aufgabe der Erfindung ist es eine Vorrichtung zum Dosieren von Schüttgut zu schaffen, die die oben angegebenen Nachteile nicht aufweist, die keine mechanischen Verschlussmechanismen aufweist, die eine mechanische Belastung des Schüttguts beim Dosieren möglichst vermeidet, die im einfachsten Fall auch manuell antreibbar ist und die einfach und kostengünstig herstellbar ist.

Gelöst wird diese Ausgabe durch die im Anspruch 1 angegebenen Merkmale.

Die wesentliche Idee der Erfindung besteht darin, bei einem drehbar gelagerten Dosierbehälter im Innem des Dosierbehälters eine schneckenförmigeTrennwand vorzusehen, die sich von einer Materialeinlassöffnung bis zu einer Materialauslassöffnung hin erstreckt und die den Innenraum des Dossierbehälters in zwei Bereiche eine Einlassbereich und einen Auslassbereich teilt. Die Trennwand ist im Innem des Dosierbehälters so angeordnet, dass bei jeder Drehung des Dosierbehälters eine bestimmte Dosiermenge Schüttgut über die Materialauslassöffnung abfließt.

Vorteilhafte Weiterentwicklungen der Erfindung sind in den Unteransprüchen angegeben.

Nachfolgend ist die Erfindung anhand eines in der Zeichnung dargestellten Ausführungsbeispiels näher erläutert.
Es zeigen;
- Fig. 1: Längs- und Querschnitt einer erfindungsgemäßen Vorrichtung in einer Befüllstellung I;
- Fig. 1a: schematische Darstellung gemäß Fig. 1 mit Schüttgut (punktiert)
- Fig. 2: Vorrichtung gemäß Fig. 1 in einer Befüllstellung II;
- Fig. 3: Vorrichtung gemäß Fig. 1 in einer Entleerstellung III
- Fig. 3a: schematische Darstellung gemäß Fig. 3 mit Schüttgut (punktiert)

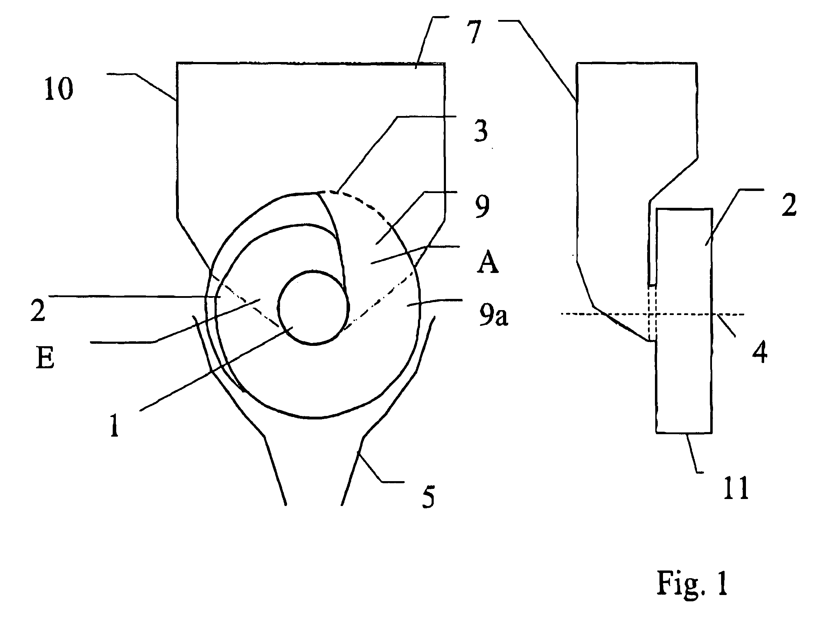

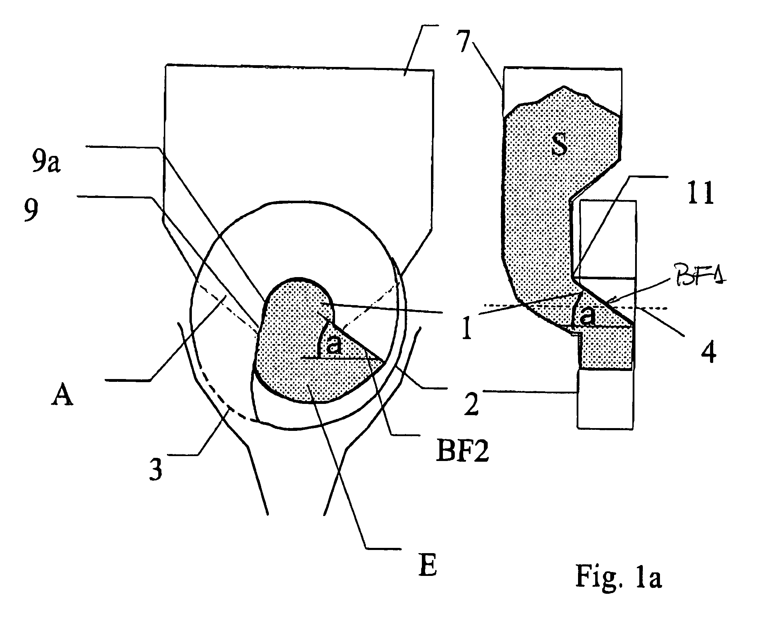

In Fig. 1 ist eine erfindungsgemäße Vorrichtung 10 in einer Befüllstellung 1 im Längs- und Querschnitt dargestellt. Die Vorrichtung 10 besteht im Wesentlichen aus einem Dosierbehälter 2 der eine Materialeinlassöffnung 1 und eine Materialauslassöffnung 3 für ein fließfähiges Schüttgut S aufweist. Der Dosierbehälter 2 ist als Trommel ausgebildet und drehbar um eine Achse 4 gelagert.

Die auf der Achse 4 angeordnete Materialeinlassöffnung 1 ist mit einem Zuführbehälter 7 verbunden, über den das Schüttgut S zugeführt werden kann.
Die Materialauslassäffnung 3 ist am Behälterrand 11 des Dosierbehälters 2 angeordnet.
Im Innenraum des Dosierbehälters 2 ist eine schneckenförmige Trennwand 9 vorgesehen, die sich in etwa von der Materialeinlassöffnung 1 bis zur Materialauslassöffnung 3 hin erstreckt.
Die Trennwand 9 teilt den Innenraum des Dosierbehälters 2 quasi in zwei Bereiche einen Einlassbereich E und einen Auslassbereich A.
In der Befüllstellung I gemäß Fig. 1 kann das Schüttgut S ungehindert in den Einlassbereich E des Dosierbehälters 2 fließen.
Durch Drehen des Dosierbehälters 2 wird ein Nachfließen des Schüttguts S ermöglicht. Das Schüttgut S wird seitlich von zwei Böschungsflächen, die im Wesentlichen durch die Fließeigenschaften des Schüttguts S bestimmt sind, begrenzt.
Fig. 1a zeigt dies sehr anschaulich in einer schematischen Darstellung gemäß Fig. 1 in der das Schüttgut S punktiert dargestellt ist. Hier lässt sich gut erkennen, wie sich die beiden Böschungsfläche BF1 bzw. BF2 mit einem Böschungswinkel α am Schüttgut S ausbilden.

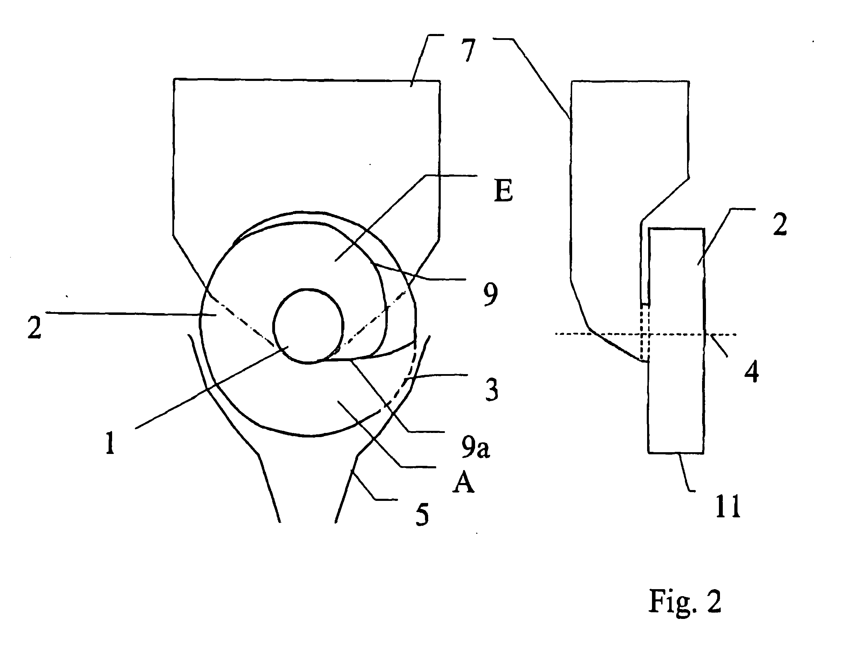

Fig. 2 zeigt die erfindungsgemäße Vorrichtung 10 in einer Befüllstellung II, die um 90° gegenüber der Befüllstellung I (Fig. 1) gedreht ist.
Die vordere Kante 9a der Trennwand 9 würde in dieser Stellung etwa die Böschungsfläche BF2 berühren.

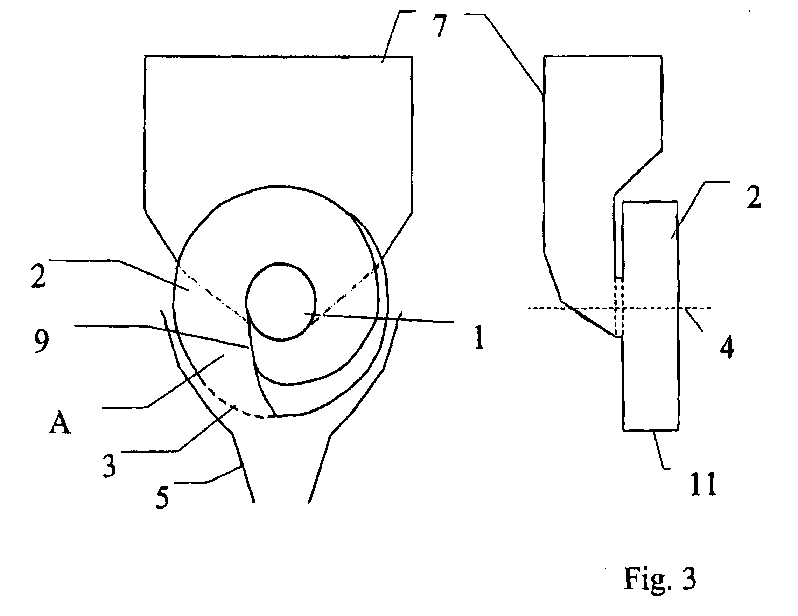

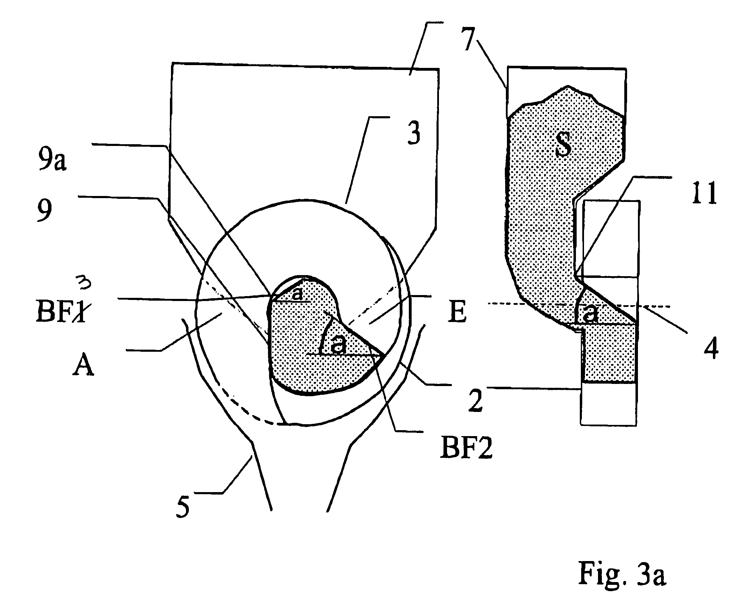

In Fig. 3 ist die Vorrichtung 10 während des Entleervorgangs in der Entleerstellung III dargestellt.
Gegenüber der Darstellung gemäß Fig. 2 ist der Dosierbehälter 2 um ca. 90° weiter gedreht.

In Fig. 3a, die der schematischen Darstellung gemäß Fig. 3 entspricht, ist das Schüttgut S ebenfalls wie in Fig. 1a punktiert dargestellt. Gut zu erkennen sind die sich am Schüttgut S in dieser Stellung des Dosierbehälters 2 ausbildenden Böschungsflächen BF2 und BF3 mit dem Böschungswinkel α.

Nachfolgend ist die Funktionsweise der Erfindung näher erläutert.
Wie bereits erwähnt, fließt das Schüttgut S in der Befüllstellung I ungehindert in den Dosierbehälter 2. Es bilden sich die beiden Böschungsflächen BF1 und BF2 aus. Ohne Drehen des Dosierbehälters 2 würde der Zufluss von Schüttgut S nach kurzer Zeit, durch das sich vor der Materialeinlassöffnung 1 anstauende Material, unterbrochen. Durch Drehen des Dosierbehälters 2 kann jedoch das Schüttgut S weiter nachfließen. Bei einer gewissen Stellung des Dosierbehälters 2 (etwa in der Befüllstellung II) berührt die Kante 9a der Trennwand 9 die Böschungsfläche BF2. Ab diesem Zeitpunkt fließt das Schüttgut im Wesentlichen nur noch in den Einlassbereich E des Dosierbehälters 2. Durch Drehen des Dosierbehälters 2 ändert sich die die Neigung der Böschungsfläche BF1 bis eine kritische Stellung des Dosierbehälters 2 erreicht wird und der im Auslassbereich A befindliche Teil des Schüttguts S, die gewünschte Dosiermenge DM, ins Rutschen kommt und über die Materialauslassöffnung 3 abfließt.
Dabei entsteht im Bereich der Kante 9a der Trennwand 9 die Böschungsfläche BF3 am Schüttgut S, das das Schüttgut S über diese Kante abfließt.
Durch weiteres Drehen des Dosierbehälters 2 erfolgt ein neues Befüllen.

Durch eine Änderung der Lage der Trennwand 9 im Dosierbehälter 2 kann die Dosiermenge DM leicht verändert werden. Denkbar ist den vorderen Teil der Trennwand 9 flexibel auszugestalten.

Mit Hilfe der erfindungsgemäßen Vorrichtung ist in einfacher Weise ein Dosieren von fließfähigem Schüttgut möglich. Bei jeder Drehung des Dosierbehälters 2 fließt die gleiche Dosiermenge DM des Schüttgut S ab. Die Vorrichtung ist besonders für bruchempfindliche Schüttgüter Schüttgütern (z. B. Cornflakes, gefrorene Pommes frites, Saatgut, Pellets) geeignet, da beim gesamten Dosiervorgang so gut wie keine Scherkräfte auf das Schüttgut S wirken.
Es werden keine mechanischen Verschlussmechanismen benötigt, die das Schüttgut beim Dosiervorgang großen mechanischen Belastungen aussetzen.

Das Schüttgut S wird kontinuierlich dem Dosierbehälter 2 zugeführt. Es findet keine Unterbrechung des Schüttgutzuflusses statt und das Schüttgut S wird zusätzlich geschont.
Aufgrund des einfachen Aufbaus der Vorrichtung, kann diese auch leicht für Schüttgüter aus dem Lebensmittelbereich (z. B. Pommes frites) angepasst werden, die eine Kühlung erfordern.

Als Antrieb für den Dosierbehälter kann z. B. ein Elektromotor oder auch ein manueller Antrieb dienen.

## Patentansprüche

1. Vorrichtung zum Dosieren von Schüttgut mit einem Dosierbehälter (2), der eine Materialeinlassöffnung (1), die mit einem Zuführbehälter (7) verbunden ist, und einen Materialauslassöffnung (3) aufweist,
**dadurch gekennzeichnet,**
**dass** der Dosierbehälter (2) drehbar gelagert ist,
**dass** der Dosierbehälter (2) eine schneckenförmige Trennwand (9) aufweist, die sich von der Materialeinlassöffnung (1) bis zur Materialauslassöffnung (3) am Behälterrand (11) hin erstreckt und die den Innenraum des Dosierbehälters (2) in zwei Bereiche, einen Einlassbereich E und einen Auslassbereich A teilt, wobei die Trennwand so angeordnet ist, dass bei dem Drehen des Dosierbehälters (2) eine definierte Dosiermenge DM des Schüttgut S über die Materialauslassöffnung (3) abfließt

2. Vorrichtung nach Anspruch 1, **dadurch gekennzeichnet, dass** der Dosierbehälter (2) als Trommel ausgebildet

3. Vorrichtung nach einem der vorhergehenden Ansprüche, **dadurch gekennzeichnet, dass** die Materialeinlassöffnung (1) auf der Trommelachse (4) und die Materialauslassöffnung (3) am Behälterrand (11) angeordnet sind.

4. Vorrichtung nach einem der vorhergehenden Ansprüche, **dadurch gekennzeichnet, dass** die Zufuhr des Schüttguts S in den Dosierbehälter (2) im Wesentlichen konstant erfolgt

5. Vorrichtung nach einem der vorhergehenden Ansprüche, **dadurch gekennzeichnet, dass** eine Kühleinrichtung zum Kühlen des Schüttguts S vorgesehen ist

6. Verwendung der Vorrichtung nach einem der vorhergehenden Ansprüche, **dadurch gekennzeichnet, dass** Pommes frites als Schüttgut dienen.

## Claims

1. Unit for dosing bulk solids with a dosing container (2) exhibiting a material inlet point (1) - which is connected to a supply container (7) - and a material outlet point (3) **characterized in that**:
the dosing container (2) is pivot-mounted.
the dosing container (2) exhibits a helical partition wall (9), which extends from the material inlet point (1) to the material outlet point (3) at the container edge (11), and which divides the interior of the dosing container (2) into two sections - namely an inlet section E and an outlet section A - whereby the partition wall is arranged in such a way that a defined dosing volume DM of the bulk solids S flows through the material outlet point (3) each time the dosing container (2) is rotated.

2. Unit as per Claim 1 **characterized in that** the dosing container (2) is designed as a drum.

3. Unit as per one of the previous Claims **characterized in that** the material inlet point (1) is arranged on the drum axis (4) and the material outlet point (3) is arranged on the container edge (11)

4. Unit as per one of the previous Claims **characterized in that** the supply of bulk solids S into the dosing container (2) is primarily constant.

5. Unit as per one of the previous Claims **characterized in that** a cooler unit is provided to cool the bulk solids S.

6. Use of the unit as per one of the previous Claims **characterized in that** French fries act as bulk solids.

## Revendications

1. Dispositif destiné au dosage de matières en vrac, doté d'un récipient de dosage (2), qui présente une ouverture d'entrée de la matière (1), laquelle est reliée avec un récipient d'alimentation (7), et une ouverture de sortie de la matière (3), **caractérisé en ce que**
le récipient de dosage (2) est tournant,
le récipient de dosage (2) comporte une cloison hélicoïdale (9), qui s'étend de l'ouverture d'entrée de la matière (1) jusque vers l'ouverture de sortie de la matière (3) sur le bord de réservoir (11) et qui divise l'intérieur du récipient de dosage (2) en deux zones, une zone d'entrée E et une zone de sortie A, la cloison étant disposée de telle manière que, lors de la rotation du récipient de dosage (2), une quantité dosée DM définie de matière en vrac S s'écoule à travers l'ouverture de sortie de la matière (3).

2. Dispositif selon la revendication 1, **caractérisé en ce que** le récipient de dosage (2) est conçu sous forme de tambour.

3. Dispositif selon l'une des revendications précédentes, **caractérisé en ce que** l'ouverture d'entrée de la matière (1) est disposée sur l'axe de tambour (4) et l'ouverture de sortie de la matière (3) sur le bord de réservoir (11).

4. Dispositif selon l'une des revendications précédentes, **caractérisé en ce que** l'alimentation de la matière en vrac S s'effectue pour l'essentiel de façon constante dans le récipient de dosage (2).

5. Dispositif selon l'une des revendications précédentes, **caractérisé en ce qu'**est prévue une unité de refroidissement destinée au refroidissement de la matière en vrac S.

6. Utilisation du dispositif selon l'une des revendications précédentes, **caractérisée en ce que** des pommes frites servent de matière en vrac.
